# EUROPÄISCHE PATENTSCHRIFT

(11) **EP 4 334 613 B1**
(45) Veröffentlichungstag und Bekanntmachung des Hinweises auf die Patenterteilung: **05.11.2025**
(21) Anmeldenummer: 22727784.5
(22) Anmeldetag: 03.05.2022
(51) Int. Cl.: F16K 17/16, F16K 17/168, F16K 43/00, F17C 13/04, F16L 37/407

(54) **ÜBERDRUCKSICHERUNG**
OVERPRESSURE PROTECTION MEANS
DISPOSITIF DE PROTECTION CONTRE LES SURPRESSIONS

(30) Priorität: 03.05.2021 DE 102021111400
(43) Veröffentlichungstag der Anmeldung: 13.03.2024
(73) Patentinhaber: Wurzer, Volker, 46485 Wesel (DE)
(72) Erfinder: BECKER, Ludger, 46485 Wesel (DE); WURZER, Volker, 46485 Wesel (DE)
(74) Vertreter: Schneiders & Behrendt Bochum
(86) Internationale Anmeldenummer: PCT/EP2022/061800
(87) Internationale Veröffentlichungsnummer: WO 2022/233841

(56) Entgegenhaltungen:
- GB-A- 191 420 873
- US-A- 1 348 708
- US-A- 4 403 626

## Beschreibung

Die Erfindung betrifft eine Überdrucksicherung mit einem Gehäuse, mindestens einer im Gehäuse gebildeten Ablassöffnung, wenigstens einer vor der Ablassöffnung am Gehäuse angeordneten Berstscheibe, und wenigstens einem am Gehäuse gebildeten Gehäuseanschluss zum Anschluss der Überdrucksicherung an ein unter Druck stehendes, mit der Überdrucksicherung abzusicherndem Volumen, wobei die Überdrucksicherung so ausgebildet ist, dass der Gehäuseanschluss mit der Ablassöffnung im Gehäuse in einer Absicherungssituation in Verbindung steht, sodass der in dem Volumen herrschende Druck an der vor der Ablassöffnung angeordneten Berstscheibe anliegt.

Eine solche Überdrucksicherung ist beispielsweise aus US 2016/0040796 A1 bekannt. Nachteilig an der hier beschrieben Lösung ist, dass der Wechsel der Berstscheibe erst nach dem Ablassen des in dem Volumen herrschenden Drucks möglich ist. Eine Trennung der Verbindung zwischen Gehäuseanschluss und Ablassöffnung ist nicht vorgesehen.

Aus GB 191420873 A ist eine Druckentlastungsvorrichtung für Hochdruckbehälter bekannt, die eine zerbrechliche Scheibe aufweist, welche bei einem entsprechenden Druckverlust bricht. Zweckmäßig weist die Druckentlastungsvorrichtung ein Kugelventil auf, welches das vollständige Entweichen der unter Druck stehenden Flüssigkeit verhindert, wenn die Scheibe bricht.Eine weitere Druckentlastungsvorrichtung ist in US 4 403 626 A beschrieben. Die Druckentlastungsvorrichtung ist mit dem Einlass eines Ventils verbunden. Ein Strömungsleitelement des Ventils ist manuell oder automatisch drehbar, wenn ein auftretender Druck die Druckentlastungsvorrichtung beispielsweise durch das Brechen einer Berstscheibe beschädigt. Das Drehen des Strömungsleitelements ermöglicht die Verbindung des Einlasses des Ventils mit einem anderen Auslass, sodass die Reparatur der beschädigten Vorrichtung durchgeführt werden kann.

Es ist Aufgabe der Erfindung, eine verbesserte Überdrucksicherung anzugeben, die eine einfache, integrierte Möglichkeit bietet, für den Austausch der Berstscheibe die Verbindung zwischen dem Gehäuseanschluss und der Ablassöffnung sicher zu trennen, um ein vollständiges Ablassen des in dem Volumen herrschenden Drucks vermeiden zu können.

Gelöst wird diese Aufgabe durch eine Überdrucksicherung mit den Merkmalen des Anspruchs 1.

Dadurch, dass in dem Gehäuse ein zwischen dem Gehäuseanschluss und der Ablassöffnung integriertes Absperrventil vorgesehen ist, welches für eine Wartungssituation, insbesondere für den Austausch der Berstscheibe, eine Trennung der Verbindung zwischen dem Gehäuseanschluss und der Ablassöffnung ermöglicht, kann ein vollständiges Ablassen des in dem Volumen herrschenden Drucks vermieden werden, bevor mit dem Austausch der Berstscheibe begonnen werden kann. Über das in dem Gehäuse integrierte Absperrventil kann sehr einfach die Verbindung zwischen dem Gehäuseanschluss und der Ablassöffnung getrennt werden, sodass in der Wartungssituation kein Fluid aus dem angeschlossenen Volumen mehr über die Ablassöffnung ausströmen kann. Hierdurch kann der Austausch der Berstscheibe in der Wartungssituation einfach und sicher erfolgen. Über die Trennung der Verbindung zwischen dem Gehäuseanschluss und der Ablassöffnung kann in der Überdrucksicherung selbst sichergestellt werden, dass kein Fluid aus dem angeschlossenen Volumen nachströmen kann. Die Berstscheibe ist so vor der Ablassöffnung angeordnet, dass in der Absicherungssituation ein Verschließen eben dieser Ablassöffnung durch die Berstscheibe erreicht wird. Hierzu wird die Berstscheibe direkt vor der Ablassöffnung positioniert, wodurch ein sehr kompakter Aufbau der Überdrucksicherung erreicht wird. Die Ablassöffnung ist hierfür in der Absicherungssituation direkt durch die Berstscheibe verschlossen. Nach dem Bersten der Berstscheibe in einer Überdrucksituation durch zu hohen, an der Berstscheibe anliegenden Druck in dem angeschlossenen Volumen, kann zum Austausch der Berstscheibe einfach das integrierte Absperrventil geschlossen werden, sodass ein sicherer Austausch der in der Überdrucksituation geborstenen Berstscheibe möglich ist.

Erfindungsgemäß ist vorgesehen, dass die Berstscheibe in einem in das Gehäuse vor die Ablassöffnung einsetzbaren Einsatz angeordnet ist. Über den Einsatz ist die Berstscheibe sicher vor der Ablassöffnung gehalten. Für den Austausch der Berstscheibe kann einfach der Einsatz aus dem Gehäuse entnommen werden, was den Austausch deutlich vereinfacht. Zur Montage der Berstscheibe muss der Einsatz einfach wieder vor der Ablassöffnung in das Gehäuse eingesetzt werden.

Die Erfindung sieht zudem vor, dass der Einsatz mit einem Vorsprung versehen ist, der bei Anordnung des Einsatzes vor der Ablassöffnung in die Ablassöffnung eintaucht und dadurch ein Verschlusselement im Inneren des Gehäuses von der Ablassöffnung anhebt, wobei das Verschlusselement bei Entfernung des Einsatzes die Ablassöffnung automatisch verschließt. Über den Vorsprung kann der Einsatz sehr einfach beim Einsetzen in das Gehäuse das Verschlusselement aufdrücken, sodass die Verbindung zwischen Gehäuseanschluss und Ablassöffnung frei ist. Das automatische Verschließen der Auslassöffnung mit dem Verschlusselement stellt eine zusätzliche Sicherheitsvorkehrung dar, da hierdurch ein Austritt von Fluid aus dem angeschlossenen Volumen bei der Entnahme des Einsatzes aus dem Gehäuse wirksam verhindert wird. Vorteilhafte Ausgestaltungen und Weiterbildungen der Erfindung ergeben sich aus den abhängigen Ansprüchen. Es ist darauf hinzuweisen, dass die in den Ansprüchen einzeln aufgeführten Merkmale auch in beliebiger und technologisch sinnvoller Weise miteinander kombiniert werden können und somit weitere Ausgestaltungen der Erfindung aufzeigen.

Gemäß einer vorteilhaften Ausgestaltung der Erfindung ist vorgesehen, dass das Absperrventil eine um eine Drehachse drehbare Ventilspindel aufweist, wobei die Ablassöffnung koaxial zu der Drehachse der Ventilspindel angeordnet ist. Über die koaxiale Anordnung der Ablassöffnung zu der Drehachse der Ventilspindel ist ein besonders einfacher Aufbau des integrierten Absperrventils möglich. Auf diese Weise lassen sich die Spindel und die weiteren Komponenten des Absperrventils sowie die Komponenten der restlichen Überdrucksicherung einfach in dem Gehäuse montieren. Auch die Herstellung des Gehäuses wird durch die koaxiale Anordnung der Drehachse der Ventilspindel und der Ablassöffnung vereinfacht.

Besonders bevorzugt ist eine Ausführungsform, die vorsieht, dass die Ventilspindel über ein Handhabungselement betätigt wird, das der Ablassöffnung in Bezug auf das Absperrventil gegenüberliegend angeordnet ist. Die Anordnung des Handhabungselement gegenüber der Ablassöffnung ermöglicht ein Trennen der Verbindung zwischen dem Gehäuseanschluss und der Ablassöffnung über die Betätigung des Handhabungselements, da das Handhabungselement einen ausreichenden Abstand zu der Ablassöffnung aufweist und aus der Ablassöffnung austretendes Fluid von dem Handhabungselement weg gerichtet ausströmt.

Eine vorteilhafte Ausführung der Erfindung sieht vor, dass der Einsatz in einer im Gehäuse an der Ablassöffnung gebildeten Einsatzaufnahme einsetzbar ist, wobei die Einsatzaufnahme mit einem seitlich von der Einsatzaufnahme abzweigenden Leitrohr verbunden ist, wobei das Leitrohr dazu ausgebildet ist, bei Entfernung des Einsatzes von der Ablassöffnung in der Einsatzaufnahme anstehendes, unter Druck stehendes Fluid aus dem am Gehäuseanschluss anschließbaren Volumen seitlich abzuleiten. Mit dem seitlichen Ableiten des unter Druck stehenden Fluids über das abzweigende Leitrohr kann sichergestellt werden, dass Personen bei der Entnahme des Einsatzes aus der Einsatzaufnahme nicht durch das Fluid verletzt werden. Bei Entfernung des Einsatzes von der Ablassöffnung wird das Fluid einfach seitlich über das Leitrohr abgeleitet, sodass dieses nicht an dem Einsatz vorbei aus der Öffnung der Einsatzaufnahme ausströmt.

Besonders vorteilhaft ist eine Ausführungsform, die vorsieht, dass ein Schutzblech oberhalb des Leitrohres vorgesehen ist, das über das Leitrohr abgeleitetes Fluid von der Überdrucksicherung weg führt. Über das Schutzblech kann das Fluid einfach von der Überdrucksicherung weg geführt werden, bis es sich in der Atmosphäre verflüchtig hat. Über dieses Schutzblech kann insbesondere der Bereich um das Handhabungselement von dem Leitrohr abgetrennt werden, sodass ein händisches Schließen des Absperrventils auch während der Ableitung von Fluid über das Leitrohr möglich bleibt. Der Bereich um das Handhabungselement des Absperrventils bleibt durch das Schutzblech vor dem aus dem Leitrohr austretenden Fluid soweit geschützt, dass eine Betätigung möglich bleibt. Außerdem dient das Schutzblech oberhalb des Leitrohres als Befestigungselement zur Befestigung der Überdrucksicherung in einer Anlage.

Eine vorteilhafte Ausgestaltung sieht vor, dass der Einsatz durch eine Überwurfmutter in der Einsatzaufnahme gesichert ist, wobei die Gewindelänge der Überwurfmutter so bemessen ist, dass das seitliche Ableiten des Drucks aus dem am Gehäuseanschluss anschließbaren Volumen vor dem vollständigen Lösen der Überwurfmutter erfolgt. Mit der Überwurfmutter ist eine einfache und sichere Möglichkeit gegeben, den Einsatz in der Einsatzaufnahme zu sichern. Über das spezielle Maß für die Gewindelänge kann sichergestellt werden, dass Personen beim Lösen der Überwurfmutter nicht von aus dem angeschlossenen Volumen austretendem Fluid verletzt werden. Vor dem vollständigen Lösen der Überwurfmutter löst sich der Einsatz in der Einsatzaufnahme so weit, dass das seitliche Ableiten des Drucks aus dem am Gehäuseanschluss anschließbaren Volumen über das Leitrohr erfolgt.

Gemäß einer bevorzugten Ausgestaltung der Erfindung ist vorgesehen, dass die Überwurfmutter über einen Sicherungsring an dem Einsatz gesichert ist. Über die Sicherung der Überwurfmutter am Einsatz kann sichergestellt werden, dass die Überwurfmutter nicht unabsichtlich gelöst wird.

Besonders vorteilhaft ist eine Ausführungsform, die vorsieht, dass der Einsatz einen Durchgang aufweist, in den die Berstscheibe eingesetzt wird, wobei die Berstscheibe über einen in den Durchgang einschraubbaren Hohlstopfen in dem Einsatz gesichert ist. Die Sicherung der Berstscheibe über den Hohlstopfen im Einsatz ermöglicht es, die Berstscheibe im aus der Einsatzaufnahme entnommenen Einsatz optimal zu positionieren, bevor der Einsatz wieder in die Einsatzaufnahme eingesetzt wird.

Weitere Merkmale, Einzelheiten und Vorteile der Erfindung ergeben sich aufgrund der nachfolgenden Beschreibung sowie anhand der Zeichnungen, die ein Ausführungsbeispiel der Erfindung zeigen. Einander entsprechende Gegenstände oder Elemente sind in allen Figuren mit den gleichen Bezugszeichen versehen. Es zeigen:
- Figur 1:: erfindungsgemäße Überdrucksicherung in Schnittansicht und
- Figur 2:: Explosionsdarstellung der Überdrucksicherung.

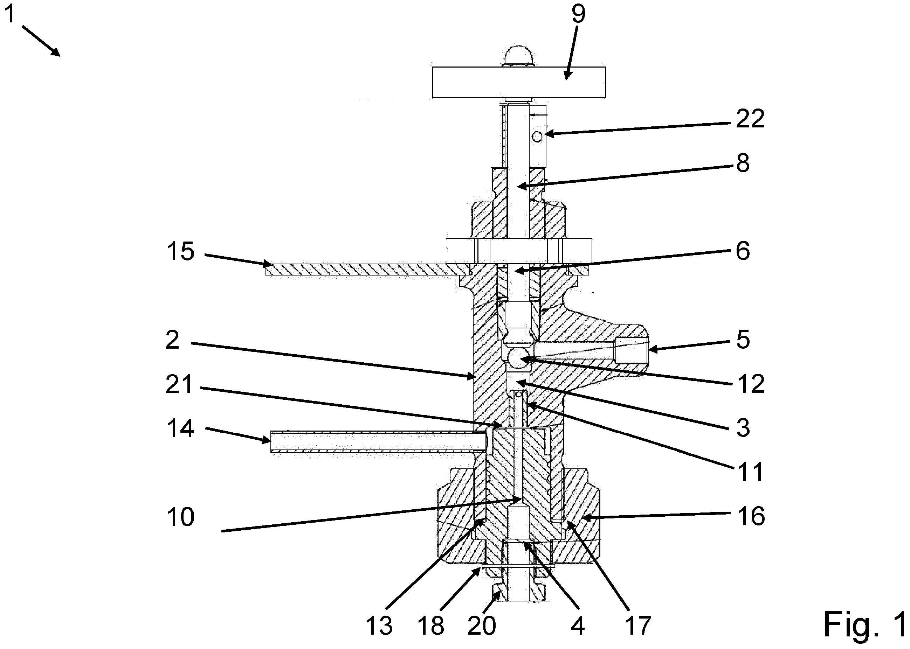

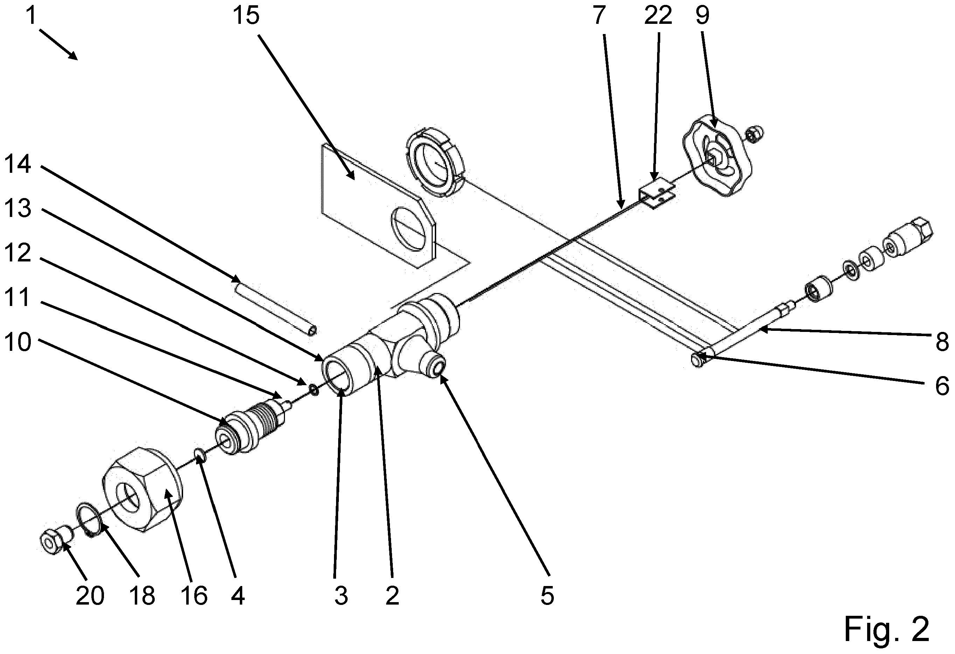

**In** der Figur 1 mit dem Bezugszeichen 1 bezeichnet ist eine erfindungsgemäße Überdrucksicherung in einer Schnittdarstellung gezeigt. Diese Überdrucksicherung 1 ist in Figur 2 in einer Explosionsdarstellung in Einzelteile zerlegt dargestellt. Die Überdrucksicherung 1 verfügt über ein Gehäuse 2, in dem eine Ablassöffnung 3 gebildet ist. Vor dieser Ablassöffnung 3 ist eine Berstscheibe 4 angeordnet, über welche die Absicherung gegen einen Überdruck erfolgt, weil die Berstscheibe 4 bei einem bestimmten Druck birst und die Ablassöffnung 3 für einen Druckausgleich an die Atmosphäre freigibt. Am Gehäuse 2 ist außerdem ein Gehäuseanschluss 5 gebildet, der zum Anschluss der Überdrucksicherung 1 an ein unter Druck stehendes, mit der Überdrucksicherung 1 abzusicherndes Volumen dient. In einer Absicherungssituation steht der Gehäuseanschluss 5 mit der Ablassöffnung 3 im Gehäuse 2 in Verbindung, sodass der in dem Volumen herrschende Druck an der vor der Ablassöffnung 3 angeordneten Berstscheibe 4 anliegt. Bildet sich also im Volumen ein Überdruck oberhalb eines Schwellwertes so birst die Berstscheibe 4 und die Ablassöffnung 3 wird freigegeben und der Überdruck im angeschlossenen (nicht gezeigten) Volumen abgebaut. Vorteilhafterweise ist in dem Gehäuse 2 ein integriertes Absperrventil 6 zwischen dem Gehäuseanschluss 5 und der Ablassöffnung 3 vorgesehen. Dieses Absperrventil 6 kann in einer Wartungssituation, insbesondere für den Austausch der Berstscheibe 4, zur Trennung der Verbindung zwischen dem Gehäuseanschluss 5 und der Ablassöffnung 3 geschlossen werden. Hierdurch kann ein vollständiges Ablassen des in dem Volumen herrschenden Drucks vermieden werden, bevor mit dem Austausch der Berstscheibe 4 begonnen werden kann. Außerdem können die Arbeiten an der Überdrucksicherung 1 zur Erneuerung der Berstscheibe 4 durch das Schließen des integrierten Absperrventils 6 abgesichert werden, sodass ein hohes Maß an Schutz gegeben ist. Das Absperrventil 6 weist eine um eine Drehachse 7 drehbare Ventilspindel 8 auf. Die Ablassöffnung 3 ist zu dieser Drehachse 7 der Ventilspindel 8 bevorzugt koaxial angeordnet. Die Ventilspindel 8 lässt sich einfach händisch über Handhabungselement 9 betätigten, das im Ausführungsbeispiel als einfaches Handrad 9 ausgebildet ist, wie besonders gut in Figur 2 zu erkennen ist. Das Handhabungselement 9 ist vorteilhafterweise in Bezug auf das Absperrventil 6 der Ablassöffnung 3 gegenüberliegend angeordnet. Mit dieser Anordnung des Handhabungselement 9 gegenüber der Ablassöffnung 3 kann die Verbindung zwischen dem Gehäuseanschluss 5 und der Ablassöffnung 3 über die Betätigung des Handhabungselements 9 auch bei aus der Ablassöffnung 3 austretendem Fluid sicher getrennt werden, da das Fluid von dem Handhabungselement 9 weggerichtet aus der Ablassöffnung 3 strömt. Weiterhin ist die Berstscheibe 4 in einem in das Gehäuse 2 einsetzbaren Einsatz 10 angeordnet, wobei der Einsatz 10 vor der Ablassöffnung 3 angeordnet werden kann. Hierzu kann der Einsatz 10 in eine Einsatzaufnahme 13 eingesetzt werde, die von dem Gehäuse 2 an der Ablassöffnung 3 gebildet ist. Vorteilhafterweise ist der Einsatz 10 zudem mit einem Vorsprung 11 versehen, welcher bei Anordnung des Einsatzes 10 vor der Ablassöffnung 3 in die Ablassöffnung 3 eintaucht und dadurch ein Verschlusselement 12 im Inneren des Gehäuses 2 von der Ablassöffnung 3 anhebt. Hierdurch wird die Ablassöffnung 3 durch das Einsetzen des Einsatzes 10 geöffnet. Der Vorsprung 11 ist in dem Ausführungsbeispiel als ein rohrförmiger Ansatz ausgebildet, durch welchen das Fluid aus dem angeschlossenen Volumen an der Berstscheibe 4 im Einsatz 10 anliegt. Das Verschlusselement 12 ist im Ausführungsbeispiel andererseits als Kugel ausgebildet, die sich bei Entfernung des Einsatzes 10 vor die, bevorzugt runde, Ablassöffnung 3 legt und diese dadurch automatisch verschließt. Hierdurch ist eine einfache, zusätzliche Sicherheitsvorkehrung realisiert, da ein Austritt von Fluid aus dem angeschlossenen Volumen bei der Entnahme des Einsatzes 10 aus dem Gehäuse 2 automatisch verhindert wird. Die Einsatzaufnahme 13 ist zudem mit einem seitlich von der Einsatzaufnahme 13 abzweigenden Leitrohr 14 verbunden. Dieses Leitrohr 14 ist dazu ausgebildet, bei Entfernung des Einsatzes 10 von der Ablassöffnung 3 in der Einsatzaufnahme 13 anstehendes, unter Druck stehendes Fluid aus dem am Gehäuseanschluss 5 anschließbaren Volumen seitlich abzuleiten. Hierdurch kann sichergestellt werden, dass Arbeiterinnen und Arbeiter bei der Entnahme des Einsatzes 10 aus der Einsatzaufnahme 13 nicht durch austretendes Fluid verletzt werden. Oberhalb des Leitrohres 14 ist zudem ein Schutzblech 15 vorgesehen ist, das über das Leitrohr 14 abgeleitetes Fluid von der Überdrucksicherung 1 weg führt. Mit dem Schutzblech 15 kann vorteilhafterweise der Bereich um das Handhabungselement 9 von dem Leitrohr 14 abgetrennt werden, sodass ein händisches Schließen des Absperrventils 6 auch während der Ableitung von Fluid über das Leitrohr 14 möglich bleibt. Außerdem dient das Schutzblech 15 oberhalb des Leitrohres 14 als Befestigungselement zur Befestigung der Überdrucksicherung 1. So kann das Schutzblech 15 in vibrationsstarken Anlagen genutzt werden, um beispielsweise an Halterungen befestigt zu werden. Dadurch kann eine Verbindungsschweißnaht an dem Gehäuseanschluss 5 zum Anschluss der Überdrucksicherung 1 an ein unter Druck stehendes, mit der Überdrucksicherung 1 abzusicherndes Volumen, entlastet werden. In dieser Funktion stellt das Schutzblech 15 ein Halteblech oder eine Montageplatte dar. Wie in den Figuren 1 und 2 zu erkennen ist, wird der Einsatz 10 durch eine Überwurfmutter 16 in der Einsatzaufnahme 13 gesichert. Die Gewindelänge 17 der Überwurfmutter 16 ist vorteilhafterweise so bemessen, dass das seitliche Ableiten des Drucks aus dem am Gehäuseanschluss 5 anschließbaren Volumen vor dem vollständigen Lösen der Überwurfmutter 16 erfolgt. Hierdurch kann sichergestellt werden, dass Personen beim Lösen der Überwurfmutter 16 nicht von aus dem angeschlossenen Volumen austretendem Fluid verletzt werden. Denn vor dem vollständigen Lösen der Überwurfmutter 16 löst sich der in der Einsatzaufnahme 13 sitzende Einsatz 10 so weit, dass das seitliche Ableiten des Drucks aus dem am Gehäuseanschluss 5 anschließbaren Volumen über das Leitrohr 14 erfolgt. Die Überwurfmutter 16 wird zudem über einen Sicherungsring 18 an dem Einsatz 10 gesichert. Wie in Figur 1 zu erkennen, weist der Einsatz 10 einen Durchgang 19 auf, in den die Berstscheibe 4 eingesetzt wird, wobei die Berstscheibe 4 über einen in den Durchgang 19 einschraubbaren Hohlstopfen 20 in dem Einsatz 10 gesichert ist. Dadurch kann die Berstscheibe 4 beispielsweise auf einem Arbeitstisch in dem Einsatz 10 positioniert und über den Hohlstopfen 20 gesichert werden, bevor der Einsatz 10 wieder in die Einsatzaufnahme 13 eingesetzt wird. Zwischen dem Einsatz 10 und der Einsatzaufnahme 13 ist außerdem ein Dichtungsring 21 vorgesehen, der eine Abdichtung zwischen dem über die Überwurfmutter 16 gesicherten Einsatz 10 und der Einsatzaufnahme 13 bietet. Die Überdrucksicherung 1 ist vorteilhafterweise gegen unsachgemäße Betätigung am Handhabungselement 9 über eine Verriegelung 22 zu sichern. Die Verriegelung 22 ist, wie in Figur 2 zu sehen, als ein u-förmiges Bauteil ausgeführt und weist zwei gegenüberliegende Bohrungen auf. Die Verriegelung 22 wird bei geöffnetem Absperrventil 6 über die Ventilspindel 8 gesteckt und vorzugsweise mit einem nicht gezeigten Vorhängeschloss durch die Bohrungen gesichert.

### Bezugszeichenliste

1 Überdrucksicherung
2 Gehäuse
3 Ablassöffnung
4 Berstscheibe
5 Gehäuseanschluss
6 Absperrventil
7 Drehachse
8 Ventilspindel
9 Handhabungselement
10 Einsatz
11 Vorsprung
12 Verschlusselement
13 Einsatzaufnahme
14 Leitrohr
15 Schutz- und Halteblech
16 Überwurfmutter
17 Gewindelänge
18 Sicherungsring
19 Durchgang
20 Hohlstopfen
21 Dichtungsring
22 Verriegelung

## Patentansprüche

1. Überdrucksicherung (1) mit
- einem Gehäuse (2),
- mindestens einer im Gehäuse (2) gebildeten Ablassöffnung (3),
- wenigstens einer vor der Ablassöffnung (3) am Gehäuse (2) angeordneten Berstscheibe (4), und
- wenigstens einem am Gehäuse (2) gebildeten Gehäuseanschluss (5) zum Anschluss der Überdrucksicherung (1) an ein unter Druck stehendes, mit der Überdrucksicherung (1) abzusicherndem Volumen, wobei die Überdrucksicherung (1) so ausgebildet ist, dass der Gehäuseanschluss (5) mit der Ablassöffnung (3) im Gehäuse (2) in einer Absicherungssituation in Verbindung steht, sodass der in dem Volumen herrschende Druck an der vor der Ablassöffnung (3) angeordneten Berstscheibe (4) anliegt, wobei in dem Gehäuse (2) ein zwischen dem Gehäuseanschluss (5) und der Ablassöffnung (3) integriertes Absperrventil (6) vorgesehen ist, welches für eine Wartungssituation, insbesondere für den Austausch der Berstscheibe (4), eine Trennung der Verbindung zwischen dem Gehäuseanschluss (5) und der Ablassöffnung (3) ermöglicht,
**dadurch gekennzeichnet,**
**dass** die Berstscheibe (4) in einem in das Gehäuse (2) vor die Ablassöffnung (3) einsetzbaren Einsatz (10) angeordnet ist, wobei der Einsatz (10) mit einem Vorsprung (11) versehen ist, der bei Anordnung des Einsatzes (10) vor der Ablassöffnung (3) in die Ablassöffnung (3) eintaucht und dadurch ein Verschlusselement (12) im Inneren des Gehäuses (2) von der Ablassöffnung (3) anhebt, wobei das Verschlusselement (12) bei Entfernung des Einsatzes (10) die Ablassöffnung (3) automatisch verschließt.

2. Überdrucksicherung (1) nach Anspruch 1, **dadurch gekennzeichnet, dass** das Absperrventil (6) eine um eine Drehachse (7) drehbare Ventilspindel (8) aufweist, wobei die Ablassöffnung (3) koaxial zu der Drehachse (7) der Ventilspindel (8) angeordnet ist.

3. Überdrucksicherung (1) nach Anspruch 2, **dadurch gekennzeichnet, dass** die Ventilspindel (8) über ein Handhabungselement (9) betätigt wird, das der Ablassöffnung (3) in Bezug auf das Absperrventil (6) gegenüberliegend angeordnet ist.

4. Überdrucksicherung (1) nach einem der Ansprüche 1 bis 3, **dadurch gekennzeichnet, dass** der Einsatz (10) in einer im Gehäuse (2) an der Ablassöffnung (3) gebildeten Einsatzaufnahme (13) einsetzbar ist, wobei die Einsatzaufnahme (13) mit einem seitlich von der Einsatzaufnahme (13) abzweigenden Leitrohr (14) verbunden ist, wobei das Leitrohr (14) dazu ausgebildet ist, bei Entfernung des Einsatzes (10) von der Ablassöffnung (3) in der Einsatzaufnahme (13) anstehendes, unter Druck stehendes Fluid aus dem am Gehäuseanschluss (5) anschließbaren Volumen seitlich abzuleiten.

5. Überdrucksicherung (1) nach Anspruch 4, **dadurch gekennzeichnet, dass** ein Schutzblech (15) oberhalb des Leitrohres (14) vorgesehen ist, das über das Leitrohr (14) abgeleitetes Fluid von der Überdrucksicherung (1) weg führt.

6. Überdrucksicherung (1) nach Anspruch 4 oder 5, **dadurch gekennzeichnet, dass** der Einsatz (10) durch eine Überwurfmutter (16) in der Einsatzaufnahme (13) gesichert ist, wobei die Gewindelänge (17) der Überwurfmutter (16) so bemessen ist, dass das seitliche Ableiten des Drucks aus dem am Gehäuseanschluss (5) anschließbaren Volumen vor dem vollständigen Lösen der Überwurfmutter (16) erfolgt.

7. Überdrucksicherung (1) nach Anspruch 6, **dadurch gekennzeichnet, dass** die Überwurfmutter (16) über einen Sicherungsring (18) an dem Einsatz (10) gesichert ist.

8. Überdrucksicherung (1) nach einem der Ansprüche 1 bis 7, **dadurch gekennzeichnet, dass** der Einsatz (10) einen Durchgang (19) aufweist, in den die Berstscheibe (4) eingesetzt wird, wobei die Berstscheibe (4) über einen in den Durchgang einschraubbaren Hohlstopfen (20) in dem Einsatz (10) gesichert ist.

## Claims

1. Overpressure protection device (1) with
- a housing (2),
- at least one drain opening (3) formed in the housing (2),
- at least one rupture disk (4) arranged in front of the drain opening (3) on the housing (2) and
- at least one housing connection (5) formed on the housing (2) for connecting the overpressure protection device (1) to a pressurized volume to be protected by the overpressure protection device (1), wherein the overpressure protection device (1) is designed such that the housing connection (5) is connected to the drain opening (3) in the housing (2) in a protection situation, so that the pressure prevailing in the volume is applied to the rupture disk (4) arranged in front of the drain opening (3), wherein an integrated shut-off valve (6) is provided in the housing (2) between the housing connection (5) and the drain opening (3), which enables a disconnection of the connection between the housing connection (5) and the drain opening (3) for a maintenance situation, in particular for the replacement of the rupture disk (4),
**characterized in**
**that** the rupture disk (4) is arranged in an insert (10) which can be inserted into the housing (2) in front of the drain opening (3), wherein the insert (10) is provided with a projection (11), which, when the insert (10) is arranged in front of the drain opening (3), plunges into the drain opening (3) and thereby lifts a closure element (12) in the interior of the housing (2) from the drain opening (3), wherein the closure element (12) automatically closes the drain opening (3) when the insert (10) is removed.

2. Overpressure protection device (1) according to claim 1, **characterized in that** the shut-off valve (6) has a valve spindle (8) rotatable about an axis of rotation (7), wherein the drain opening (3) is arranged coaxially to the axis of rotation (7) of the valve spindle (8).

3. Overpressure protection device (1) according to claim 2, **characterized in that** the valve spindle (8) is actuated via a handling element (9) which is arranged opposite the drain opening (3) with respect to the shut-off valve (6).

4. Overpressure protection device (1) according to any one of claims 1 to 3, **characterized in that** the insert (10) can be inserted in an insert receptacle (13) formed in the housing (2) at the drain opening (3), wherein the insert receptacle (13) is connected to a guide tube (14) branching off laterally from the insert receptacle (13), wherein the guide tube (14) is designed to laterally drain pressurized fluid present in the insert receptacle (13) from the volume connectable to the housing connection (5) when the insert (10) is removed from the drain opening (3).

5. Overpressure protection device (1) according to claim 4, **characterized in that** a protective plate (15) is provided above the guide tube (14), which guides fluid discharged via the guide tube (14) away from the overpressure protection device (1).

6. Overpressure protection device (1) according to claim 4 or 5, **characterized in that** the insert (10) is secured in the insert receptacle (13) by a union nut (16), wherein the thread length (17) of the union nut (16) is dimensioned such that the lateral discharge of the pressure from the volume which can be connected to the housing connection (5) takes place before the union nut (16) is completely loosened.

7. Overpressure protection device (1) according to claim 6, **characterized in that** the union nut (16) is secured to the insert (10) via a retaining ring (18).

8. Overpressure protection device (1) according to any one of claims 1 to 7, **characterized in that** the insert (10) has a passage (19) into which the rupture disc (4) is inserted, wherein the rupture disc (4) is secured in the insert (10) via a hollow plug (20) which can be screwed into the passage.

## Revendications

1. Dispositif de protection contre la surpression (1) avec
- un boîtier (2),
- au moins une ouverture d'évacuation (3) formée dans le boîtier (2),
- au moins un disque de rupture (4) disposé devant l'ouverture d'évacuation (3) sur le boîtier (2) et
- au moins un raccord de boîtier (5) formé sur le boîtier (2) pour raccorder le dispositif de protection contre la surpression (1) à un volume sous pression à protéger par le dispositif de protection contre la surpression (1), le dispositif de protection contre la surpression (1) étant conçu de telle sorte que le raccord de boîtier (5) est relié à l'ouverture d'évacuation (3) dans le boîtier (2) dans une situation de sécurité, de sorte que la pression régnant dans le volume s'applique sur le disque de rupture (4) disposé devant l'ouverture d'évacuation (3), une soupape d'arrêt (6) intégrée étant prévue dans le boîtier (2) entre le raccord du boîtier (5) et l'ouverture d'évacuation (3), qui permet, dans une situation de maintenance, en particulier pour le remplacement du disque de rupture (4), de séparer la connexion entre le raccord du boîtier (5) et l'ouverture d'évacuation (3),
**caractérisé en ce que**
le disque de rupture (4) est disposé dans un insert (10) pouvant être inséré dans le boîtier (2) devant l'ouverture d'évacuation (3), l'insert (10) étant pourvu d'une saillie (11) qui, lorsque l'insert (10) est disposé devant l'ouverture d'évacuation (3), plonge dans l'ouverture d'évacuation (3) et soulève ainsi un élément de fermeture (12) à l'intérieur du boîtier (2) de l'ouverture d'évacuation (3), l'élément de fermeture (12) fermant automatiquement l'ouverture d'évacuation (3) lors du retrait de l'insert (10).

2. Dispositif de protection contre la surpression (1) selon la revendication 1, **caractérisé en ce que** la soupape d'arrêt (6) comporte une tige de soupape (8) pouvant tourner autour d'un axe de rotation (7), l'ouverture d'évacuation (3) étant disposé coaxialement à l'axe de rotation (7) de la tige de soupape (8).

3. Dispositif de protection contre la surpression (1) selon la revendication 2, **caractérisé en ce que** la tige de soupape (8) est actionnée par un élément de commande (9) qui est disposé en face de l'ouverture d'évacuation (3) par rapport à la soupape d'arrêt (6).

4. Dispositif de protection contre la surpression (1) selon l'une des revendications 1 à 3, **caractérisé en ce que** l'insert (10) peut être inséré dans un logement d'insert (13) formé dans le boîtier (2) au niveau de l'ouverture d'évacuation (3), le logement d'insert (13) étant relié à un tube de guidage (14) qui bifurque latéralement à partir du logement d'insert (13), le tube de guidage (14) étant conçu pour évacuer latéralement, lors du retrait de l'insert (10) de l'ouverture d'évacuation (3), le fluide sous pression présent dans le logement d'insert (13) provenant du volume pouvant être raccordé au raccord du boîtier (5).

5. Dispositif de sécurité contre la surpression (1) selon la revendication 4, **caractérisé en ce qu'**une tôle de protection (15) est prévue au-dessus du tube de guidage (14) pour évacuer le fluide dérivé du tube de guidage (14) loin du dispositif de sécurité contre la surpression (1).

6. Dispositif de sécurité contre la surpression (1) selon la revendication 4 ou 5, **caractérisé en ce que** l'insert (10) est fixé dans le logement d'insert (13) par un écrou-raccord (16), la longueur du filetage (17) de l'écrou-raccord (16) étant dimensionnée de telle sorte que la décharge latérale de la pression provenant du volume raccordé au raccord du boîtier (5) avant le desserrage complet de l'écrou-raccord (16).

7. Dispositif de sécurité contre la surpression (1) selon la revendication 6, **caractérisé en ce que** l'écrou-raccord (16) est fixé à l'insert (10) par une bague de sécurité (18).

8. Dispositif de sécurité contre la surpression (1) selon l'une des revendications 1 à 7, **caractérisé en ce que** l'insert (10) présente un passage (19) dans lequel est inséré le disque de rupture (4), le disque de rupture (4) étant fixé dans l'insert (10) à l'aide d'un bouchon creux (20) pouvant être vissé dans le passage.
